(19) Europäisches Patentamt

European Patent Office

Office européen des brevets

(11) **EP 1 463 581 B1**

(12) **EUROPEAN PATENT SPECIFICATION**

(45) Date of publication and mention
of the grant of the patent:
**15.02.2006 Bulletin 2006/07**

(21) Application number: **02768157.6**

(22) Date of filing: **26.09.2002**

(51) Int Cl.:
**B01J 29/06** (2006.01)

(86) International application number:
**PCT/KR2002/001815**

(87) International publication number:
**WO 2004/016352 (26.02.2004 Gazette 2004/09)**

(54) **HYDROCARBON STEAM CRACKING CATALYST FOR OLEFIN PREPARATION, METHOD FOR PREPARING THE SAME, AND OLEFIN PREPARATION METHOD USING THE SAME**

KOHLENWASSERSTOFF-STEAMCRACKING-KATALYSATOR FÜR DIE OLEFINHERSTELLUNG, HERSTELLUNGSVERFAHREN DAFÜR UND OLEFINHERSTELLUNGSVERFAHREN UNTER VERWENDUNG DES KATALYSATORS

CATALYSEUR POUR VAPOCRAQUAGE D'HYDROCARBURES POUR LA PREPARATION D'OLEFINES, PROCEDE DE PREPARATION ASSOCIE, ET PROCEDE DE PREPARATION D'OLEFINE UTILISANT CE CATALYSEUR

(84) Designated Contracting States:
**AT BE BG CH CY CZ DE DK EE ES FI FR GB GR IE IT LI LU MC NL PT SE SK TR**

(30) Priority: **19.08.2002 KR 2002048774**

(43) Date of publication of application:
**06.10.2004 Bulletin 2004/41**

(73) Proprietor: **LG Chem, Ltd.**
**Seoul 150-721 (KR)**

(72) Inventors:
• **Jeong, Sang-Mun**
Yuseong-gu,
**305-729 Daejeon-city (KR)**
• **Lee, Won-Ho**
Seo-gu,
**302-741 Daejeon-city (KR)**
• **Chae, Jong-Hyun**
**302-734 Daejeon-city (KR)**
• **Kang, Jun-Han**
Yuseong-gu,
**305-340 Daejeon-city (KR)**
• **Park, Sang-Ku**
**156-092 Seoul (KR)**

(74) Representative: **Roos, Peter et al**
**Klinger & Kollegen**
**Bavariaring 20**
**D-80336 München (DE)**

(56) References cited:
**EP-A1- 0 503 876          EP-A2- 0 252 761**
**GB-A- 832 297**

**Description**

**BACKGROUND OF THE INVENTION**

**(a) Field of the Invention**

The present invention relates to a catalyst for preparing ethylene and propylene, particularly to a catalyst for steam cracking of hydrocarbons that can steam crack hydrocarbons to improve yield when preparing olefins such as ethylene and propylene, reduce generated coke, and that has superior thermal stability at a high temperature, and preparation thereof, and a method for preparing olefins using the same.

**(b) Description of the Related Art**

Ethylene and propylene are important basic raw materials for petrochemicals. They are prepared by thermal cracking hydrocarbons having paraffin compounds as main ingredients, such as natural gas, naphtha, gasoil, etc. in the presence of steam at a high temperature of 800°C or more. In order to increase yields of ethylene and propylene in hydrocarbon steam cracking, the conversion rate of hydrocarbons should increase, or the selectivity of olefins should increase. However, because increasing the conversion rate of hydrocarbons or the selectivity of olefins by steam cracking only is limited, various methods for increasing olefin yield have been suggested.

As a method for improving ethylene and propylene yield in hydrocarbon steam cracking, steam cracking using a catalyst has been suggested. U.S.P. No. 3,644,557 has disclosed using a catalyst consisting of magnesium oxide and zirconium oxide, U.S.P. No. 3,969,542 disclosed a catalyst having calcium aluminate as a basic ingredient, U.S.P. No. 4,111,793 disclosed a manganese oxide catalyst supported in zirconium oxide, E.P. No. 0212320 disclosed a ferrous catalyst supported in magnesium oxide, and U.S.P. No. 5,600,051 disclosed a catalyst consisting of barium oxide, alumina, and silica. However, these catalysts have problems of serious catalyst coking during hydrocarbon steam cracking.

Decomposition of hydrocarbons at high temperatures generates substantial amounts of coke. In order to remove such coke, steam is used as a reactant-diluting agent, but significant coking still occurs and it is accumulated on reactor wall surfaces, etc. and causes many problems.

Specifically, coke accumulated on the wall surface of a thermal cracking reaction tube increases heat transfer resistance, which decreases the amount of heat transferred to the hydrocarbons. When heat transfer resistance increases, the reactor temperature must be increased in order to provide a heat quantity that is sufficient for reaction, which shortens the life of the reactor. Additionally, coke accumulated on the surface of the reactor wall reduces the effective cross section of the reactor, increasing the differential pressure of the reactor, and consequently more energy is required for compressing and injecting reactant.

As explained, in steam cracking of hydrocarbons, coke increases heat transfer resistance or differential pressure, which makes normal operation of the reactor impossible, and thus the operation of the reactor must be interrupted in order to remove the coke. Particularly, if a catalyst is used in hydrocarbon steam cracking, coke is accumulated on the surface of the catalyst as well as on the wall surface of the reactor, which may cause more serious problems.

Accumulation of coke on the catalyst surface lowers the catalyst performance, as well as rapidly increases differential pressure on the catalyst layer, and thus in order to normally operate the reactor, the reactor operation must be interrupted more frequently. Since the catalyst surface has a function for collecting-condensing coke precursors produced in the gas phase, and it may have an activity for promoting coke production according to catalyst components, a catalyst for hydrocarbon steam cracking should have properties for preventing coking to the highest degree. Generally, in commercial steam-cracking reactors, coke is removed with a cycle of 30 to 60 days, and for this, operation of the reactor is interrupted and the coke is burned to remove it while drawing off fumes under a steam atmosphere. The time required for removing coke varies according to the amount of coke accumulated on the reactor, and generally 1 to 2 days are required. However, if a catalyst having insufficient coke-removal performance is used and thus the coke-removal cycle is substantially shortened, even if the use of a catalyst increases ethylene and propylene yields, ethylene and propylene production amounts per unit period may decrease compared to the pure thermal cracking process, and expenses for coke-removal may increase. Therefore, in order to bring about economic efficiency in a process using a catalyst in hydrocarbon steam cracking, a catalyst that can minimize catalyst coking and prolong the coke-removal cycle is required.

As a method for reducing coke generation, a method for gasifying coke to remove it has been suggested. U.S.P. No. 3,872,179 suggested a catalyst in which an alkali metal oxide is added to a zirconium catalyst, and Russian Patent No. 1,011,236 suggested a potassium vanadate catalyst in which boron oxide is supported on an alumina carrier. Since such alkali metal oxide and potassium vanadate compounds gasify produced coke into $CO_x$, they are very effective in coke removal, and coke removal performance can be improved by increasing a supported amount and thus the coke removal cycle can be prolonged correspondingly.

However, the loss of alkali metal oxide or potassium vanadate catalyst inevitably occurs at a high temperature to crack hydrocarbons. Specifically, they are likely to exist in a liquid phase in a thermal cracking reactor at a high temperature due to a low melting point of the catalyst components, and the catalyst components are evaporated because of a rapid reactant gas flow, which causes a loss as the reaction proceeds. This shortens the life cycle of the catalyst, and in order to compensate for such a loss of catalyst, catalyst components are added during reaction. In order to give economical efficiency to thermal cracking and avoid a complicated process, a catalyst having superior thermal stability at a high temperature is required.

EP-A-122 026 discloses a method for preparing epoxides from 1,2-glycol by means of vapor phase dehydration using an alkali metal phosphate catalyst supported on $\alpha$-alumina.

## SUMMARY OF THE INVENTION

The present invention is made in consideration of the problems of the prior art, and it is an object of the present invention to provide a catalyst for steam cracking of hydrocarbons that steam cracks hydrocarbons to improve yield when preparing olefins such as ethylene and propylene, and simultaneously reduces produced coke, and has superior coke-removal performance and thermal stability at a high temperature, and preparation thereof, and a method for preparing olefins by hydrocarbon steam cracking using the same.

In order to achieve these objects, the present invention provides a process for preparing olefins according to claim 1. The dependent claims are directed to advantageous embodiments of the invention.

## BRIEF DESCRIPTION OF THE DRAWINGS

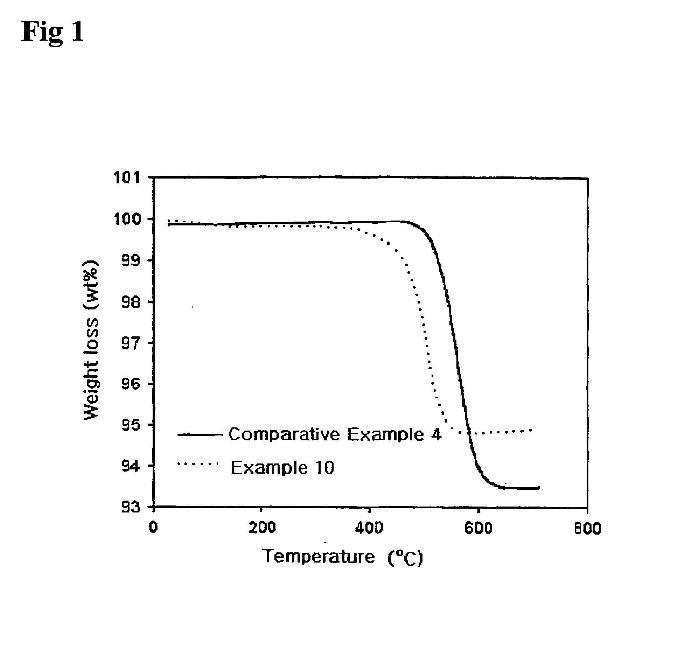

Fig. 1 shows results of combustion tests of Comparative Example 4 and Example 10, using a thermogravimetric analyzer.

## DETAILED DESCRIPTION AND THE PREFERRED EMBODIMENTS

The present invention will now be explained in detail.

General hydrocarbon steam cracking prepares ethylene, propylene, etc. by steam cracking reactants at a high temperature of 800 °C or more without a catalyst, using natural gas, naphtha, gasoil, etc. as a reactant. The present invention is based on the discovery that when using potassium phosphate as a catalyst component in such steam cracking, ethylene and propylene yields can increase compared to conventional steam cracking, and performance of removing coke produced in a catalyst during thermal cracking as well as thermal stability of the catalyst are superior.

The catalyst of the present invention for steam cracking of hydrocarbons, comprising potassium phosphate as a catalyst component, is used in form of a supported catalyst in which potassium phosphate is supported in a carrier, or in form of a calcined catalyst in which a mixture of potassium phosphate and metal oxide is calcined.

Potassium phosphate used as an active ingredient in the present invention efficiently removes coke, and has a high melting point and thus is very stable at high temperatures where steam cracking of hydrocarbons occurs. Conventionally used catalysts, if they have superior coke-removal performance, produce excessive COx or they are inferior in stability at high temperatures to cause loss of active material. Meanwhile, since the catalyst of the present invention uses potassium phosphate that has very high melting point and simultaneously has superior coke-removal performance, loss of the active ingredient potassium phosphate does not occur while it significantly decreases the amount of coke accumulated in the catalyst.

In the supported catalyst in which potassium phosphate is supported on a carrier, one of the forms of the catalyst of the present invention, it is preferable in terms of hydrocarbon steam cracking that, on the basis of total supported catalyst weight, 0.5 to 50 wt% of potassium phosphate is supported. If less than 0.5 wt% of potassium phosphate is supported, it is difficult to show catalyst performance, and if it exceeds 50 wt%, effects are not in proportion to the supported amount.

As a carrier, common carriers such as $\alpha$-alumina, silica, silica-alumina, zirconium oxide, magnesium oxide, magnesium aluminate, calcium aluminate, and zeolite can be used. Preferably, a carrier having a surface area of 0.1 $m^2$/g or less is used.

The supported catalyst is prepared by dissolving a potassium phosphate precursor of a potassium phosphate salt such as potassium phosphate or potassium phosphate hydrate ($K_3PO_4 \cdot nH_2O$), or a salt of potassium hydroxide and ammonium phosphate, in water, to prepare an aqueous solution thereof, impregnating the aqueous solution in $\alpha$-alumina by an initial impregnation method or a liquid impregnation method, and drying at 120 °C for 10 hours or more. Additionally, a carrier in which potassium phosphate is impregnated may be calcined at a high temperature so that the potassium phosphate may be firmly fixed. Calcination is preferably conducted at 750 to 1500 °C for 4 hours or more. If calcination at more than 1500 °C, potassium phosphate may be evaporated and lost.

In addition, a calcined catalyst in which a mixture of potassium phosphate and a metal oxide is calcined, one of the forms of the catalyst of the present invention, is prepared by physically mixing a potassium phosphate precursor powder of a potassium phosphate salt such as potassium phosphate powder or potassium phosphate hydrate ($K_3PO_4 \cdot nH_2O$), or a salt of potassium hydroxide and ammonium phosphate, with metal oxides such as $\alpha$-alumina, silica, silica-alumina, zirconium oxide, magnesium oxide, magnesium aluminate, potassium aluminate, or zeolite, and then calcination it at a high temperature and forming it into a regular shape. Calcination is preferably conducted at 400 to 1500 °C. If calcination at more than 1500 °C, the potassium phosphate may be evaporated and lost. The contents of potassium phosphate required for hydrocarbon steam cracking are preferably 0.5 to 50 wt% in the calcined catalyst. If less than 0.5 wt% of potassium phosphate are contained, it is difficult to show catalyst performance, and if more than 50 wt% are contained, effects are not proportional to the contents.

The process for preparing various olefins by hydrocarbon steam cracking comprises the step of steam cracking various hydrocarbons in the presence of a catalyst comprising potassium phosphate as a catalyst component. The steam cracking is conducted under common steam cracking conditions. For examples, steam cracking is conducted at a reaction temperature of 600 to 1000 °C, at a weight ratio of steam/hydrocarbons of 0.3 to 1.0, and at an LHSV (liquid hourly space velocity) of 1 to 20 hr$^{-1}$, in the presence of a catalyst for hydrocarbon steam cracking to prepare olefins.

In applying the hydrocarbon steam cracking, applicable reactors include a fixed bed reactor, a fluidized bed reactor, a moving bed reactor, etc. Generally, in a reaction process repeatedly recycling a catalyst within a short period such as a fluidized bed reactor or a moving bed reactor, if $\alpha$-alumina itself is used as a catalyst, the catalyst particles function as a heat transfer medium to increase the hydrocarbon conversion rate, thereby increasing the ethylene and propylene yield. Particularly, if the potassium phosphate catalyst component of the present invention is supported or contained in such a catalyst, less coke is produced compared to conventional catalysts (or solid heat medium) and there is no loss of catalyst component, so it is very economical.

In the case hydrocarbon steam cracking is proceeded in a fixed bed reactor, it is preferable to use a supported catalyst in which potassium phosphate is supported in $\alpha$-alumina. A catalyst used in the fixed bed reactor may be formed into circle or pellet shapes, but in this case, differential pressure falls a great deal on the catalyst layer, and thus in order to solve this problem, it is preferable to form a catalyst in a lasik ring shape or other special shapes so as to increase porosity of the catalyst layer as much as possible.

When the catalyst of the present invention comprising potassium phosphate as a catalyst component is used when preparing various olefins by hydrocarbon steam cracking, a high yield of olefins such as ethylene and propylene can be obtained, and the amount of coke produced during reaction can be reduced and the loss of the catalyst component at a high temperature can be minimized. Additionally, after hydrocarbon thermal cracking is completed, coke accumulated in the catalyst is easily removed even at a low temperature during a catalyst regeneration process of removing coke produced in the catalyst. Specifically, coke produced in the catalyst comprising potassium phosphate in hydrocarbon steam cracking can be easily removed by heating at 500 to 1300 °C in the presence of air, air and steam, or steam.

Therefore, the catalyst according to the present invention can largely improve ethylene and propylene yield compared to conventional steam cracking, largely reduce the amount of coke accumulated on a catalyst during hydrocarbon cracking, and it has superior thermal stability and thus loss of the catalyst component can be prevented. In addition, since coke removal can be conducted at a low temperature during a regeneration process of the catalyst, the life cycle of the catalyst can increase, and the catalyst activity is superior when repeatedly using it.

The present invention will be explained in more detail with reference to the following Examples. However, these are to illustrate the present invention and the present invention is not limited to them.

[Examples]

Comparative Examples 1~2 and Examples 1~4

As a carrier for preparing a catalyst, $\alpha$-alumina is used. The $\alpha$-alumina is spherical with a diameter of 5 mm, and has a surface area of 0.04 m$^2$/g, porosity of 21.89%, and an average pore diameter of 19.76 mm.

In order to prepare a catalyst of Comparative Examples 1~2 using the alumina carrier, as shown in Table 2, 4.06 g of potassium hydroxide, a precursor of potassium vanadate, 8.48 g of ammonium vanadate, and 3.54 g of boron acid were dissolved in 15 to 50 g of water according to the porosity of the $\alpha$-alumina to prepare an aqueous solution. The aqueous solution was supported in 100 g of alumina by an incipient wetness method. The catalyst in which the catalyst precursor aqueous solution was impregnated in $\alpha$-alumina was dried in an oven at 110 °C under an air atmosphere for 10 hours or more, and then transferred to a furnace to calcine at 750 °C for 4 hours. The catalysts calcined according to the above-explained process commonly have 10 wt% of potassium vanadate and 2 wt% of boron oxide, on the basis of the weight of the $\alpha$-alumina.

Additionally, in order to prepare catalysts of Examples 1-4 using the alumina carrier, as shown in Table 2, 10.8 to 16.2 g of potassium phosphate hydrate ($K_3PO_4 \cdot 1H_2O$), a precursor of potassium phosphate, were dissolved in 15 to 50 g of water according to the porosity of the α-alumina to prepare an aqueous solution thereof, and then the aqueous solution was supported on 100 g of the alumina carrier by an incipient wetness method. The impregnated catalyst was dried in an oven at 110 °C for 10 hours or more, and then transferred to a calcination furnace to fire at 750 to 1000 °C for 4 hours. The catalyst calcined according to the above-explained process has 10 to 15 wt% of potassium phosphate, on the basis of the weight of the α-alumina.

Using each of the prepared catalysts, ethylene and propylene were prepared by the following method. In steam cracking of hydrocarbons, naphtha was used for the hydrocarbons and the composition and physical properties of the naphtha used are as shown in Table 1.

[Table 1]

| Physical properties | | | Composition (wt%) | | | |
|---|---|---|---|---|---|---|
| Density (g/cc) | Initial boiling point (°C) | Final boiling point (°C) | n-paraffin | I-paraffin | naphthene | aromatic |
| 0.675 | 30.9 | 160.7 | 39.5 | 38.9 | 15.3 | 6.3 |

The reactants naphtha and water were injected into a reactor with a metering pump, with the injection ratio of naphtha and water controlled to a weight ratio of 2 : 1 and the flow rate of naphtha controlled so that the LHSV became 10 hr$^{-1}$. Before the naphtha and water were injected into the reactor, they were respectively passed through a vaporizer and mixed, the mixture was passed through a first preheater and heated to 550 °C, then through a second preheater to be heated to 650 °C, and finally it was injected into a quartz reactor filled with a catalyst (length: 45 cm; diameter: 3/8 inches).

The reactor was heated to 880 °C by an electrical furnace consisting of 3 stages, and contact thermal cracking occurred while the steam-naphtha mixture, having passed through the second preheater, passed through the reactor. While the reaction product passed through two condensers connected in series, water and heavy oil were condensed and separated as a liquid phase, and the remaining gas-phase mixture was analyzed by gas chromatography on-line and then discharged. The ethylene yield was calculated by the following Mathematical Formula 1, and the yield of the other product (propylene) was calculated by the same method.

[Mathematical Formula 1]

$$\text{Ethylene yield (wt\%)} = \text{ethylene production amount} / \text{naphtha injection amount} \times 100$$

In the following Table 2, results of catalytic cracking and pure steam cracking of naphtha are shown. After the reaction was completed, the catalyst layer was separated into upper, middle, and lower stages, and the catalyst was taken from the lower stage where the most coke was produced and the amount of coke produced in the catalyst was measured. Ethylene and propylene yields are shown as wt% on the basis of the amount of naphtha injected during a 4 hour reaction, and the amount of coke is shown as wt% on the basis of the weight of the catalyst taken after the reaction.

[Table 2]

| | Comparative Example 1 | Comparative Example 2 | Example 1 | Example 2 | Example 3 | Example 4 |
|---|---|---|---|---|---|---|
| Catalyst composition | Catalyst-free thermal cracking | $KVO_3$ 10 wt% $B_2O_3$ 2 wt% | $K_3PO_4$ 10 wt% | $K_3PO_4$ 10 wt% | $K_3PO_4$ 15 wt% | $K_3PO_4$ 15 wt% |
| Carrier | - | alumina | Alumina | alumina | alumina | alumina |
| Calcination temperature (°C) | - | 750 | 750 | 1000 | 750 | 1000 |

Table continued

| | Comparative Example 1 | Comparative Example 2 | Example 1 | Example 2 | Example 3 | Example 4 |
|---|---|---|---|---|---|---|
| Ethylene yield (wt%) | 23.9 | 31.1 | 31.6 | 31.2 | 31.4 | 31.2 |
| Propylene yield (wt%) | 12.8 | 17.3 | 17.2 | 17.2 | 17.2 | 17.2 |
| Coke produced in catalyst after reaction (wt%) | - | 7.64 | 6.04 | 6.76 | 2.8 | 4.0 |

As shown in Table 2, ethylene and propylene products of Examples 1~4 using the potassium phosphate catalyst component were much higher than those of Comparative Example 1 in which naphtha was thermally cracked without using a catalyst. Additionally, the amount of coke produced in the catalyst of Examples 1~4 using the potassium phosphate catalyst component substantially decreased by 20 to 64 % based on that of Comparative Example 2 using potassium vanadate and boron oxide as catalyst components.

Examples 5~7

In order to prepare catalysts of Examples 5~7, the same $\alpha$-alumina carrier as used in Comparative Example 2 and Examples 1~4 was used. As a precursor of potassium phosphate, 7.89 to 11.8 g of potassium hydroxide (KOH) and 5.44 to 8.16 g of ammonium phosphate salt ($(NH_4)H_2PO_4$) were dissolved in water to prepare an aqueous solution, and then the aqueous solution was supported on 100 g of a carrier by an incipient wetness method.
The supported catalyst was dried in an oven of 110 °C for 10 hours or more, and then transferred to a furnace to calcine at 750 to 1000 °C for 4 hours. The catalyst calcined according to the above-explained process has 10 to 15 wt% of potassium phosphate on the basis of the weight of $\alpha$-alumina. Hydrocarbon steam cracking of the prepared catalyst was conducted by the same process as in Examples 1~4, and the results are as shown in Table 3.

[Table 3]

| | Comparative Example 1 | Comparative Example 2 | Example 5 | Example 6 | Example 7 |
|---|---|---|---|---|---|
| Catalyst composition | Catalyst-free thermal cracking | $KVO_3$ 10 wt% $B_2O_3$ 2 wt% | $K_3PO_4$ 10 wt% | $K_3PO_4$ 10 wt% | $K_3PO_4$ 15 wt% |
| Carrier | - | alumina | alumina | alumina | alumina |
| Calcination temperature | - | 750 | 750 | 1000 | 750 |
| Ethylene yield (wt%) | 23.9 | 31.1 | 31.5 | 31.2 | 31.0 |
| Propylene yield (wt%) | 12.8 | 17.3 | 17.1 | 17.1 | 17.5 |
| Coke produced in the catalyst after reaction (wt%) | - | 7.64 | 5.91 | 6.39 | 1.8 |

As shown in Table 3, even if the precursor is changed when preparing a catalyst comprising potassium phosphate, ethylene and propylene products of Examples 5~7 substantially increase compared to thermal cracking of Comparative Example 1. Additionally, compared to Comparative Example 2 using potassium vanadate and boron oxide as catalyst components, Examples 5~7 showed similar ethylene and propylene yields, but the amount of coke produced in the catalysts substantially decreased, by 23 to 77 % based on that of comparative example.

Comparative Example 3, Examples 8~9

One of the disadvantages of a catalyst in which potassium vanadate and boron oxide are supported is that the catalyst component is lost during thermal cracking at a high temperature. In order to measure the loss of catalyst component, each of the catalysts were placed in a reactor at 880 °C while injecting 2.8 g of steam per minute therein, and the amount of catalyst component was measured after 10 hours. The amount of loss of each catalyst compared to the initial catalyst component is shown in Table 4 as wt%.

[Table 4]

| | | Comparative Example 2 | Example 8 | Example 9 |
|---|---|---|---|---|
| Catalyst component | | $KVO_3$ / $B_2O_3$ | $K_3PO_4$ | $K_3PO_4$ |
| carrier | | alumina | alumina | alumina |
| Calcination temperature(°C) | | 750 | 750 | 1000 |
| Loss amount (wt%) | K | 20 | 0 | 0 |
| | V | 20 | - | - |
| | B | 96 | - | - |

As shown in Table 4, in Comparative Example 3 using potassium vanadate and boron oxide as catalyst components, with steam treating at 880 °C for 10 hours, the loss of potassium and vanadium was about 20 wt%, and almost all the boron was lost. Therefore, it can be seen that the catalyst consisting of potassium vanadate and boron oxide lost a lot of catalyst components during thermal cracking of hydrocarbons. However, as in Examples 8 and 9, if potassium phosphate is used as a catalyst component, there is little loss of catalyst component.

Comparative Example 4, Example 10

In steam cracking of hydrocarbons using a catalyst, coke is continuously accumulated on the wall surface of a reactor and the surface of a catalyst and thus operation must be interrupted and a recycling process must be conducted. In order to prolong the life of the catalyst, the coke should be rapidly removed at a low temperature in a catalyst recycling process, which allows the hydrocarbon cracking process to be operated again within a short time and thus is very favorable in terms of economy.

In Comparative Example 4 and Example 10, combustion tests were respectively conducted for the KVO3/alumina catalyst and the K3PO4/alumina catalyst on which coke was deposited, using a thermogravimetric analyzer. The injected gas was air and the flow rate was fixed at 50 ml/min. The results of combustion tests of Comparative Example 4 and Example 10 are shown in Fig. 1.

As seen from the results, coke deposited on the K3PO4/alumina catalyst of Comparative Example 10 begins to be removed at a temperature of about 100 °C lower than the temperature when the coke deposited on the KVO3/alumina catalyst of Comparative Example 4 begins to be removed, and the temperature at which the combustion of coke is terminated was about 100 °C lower than that of the KVO3/alumina catalyst (Comparative Example 4). Therefore, it was confirmed that a catalyst to which K3P04 is added is also very favorable in the catalyst regeneration process. The regeneration process can be conducted using air, or using a mixed gas of steam and air, or using only steam.

Example 11

Potassium phosphate hydrate ($K_3PO_4 \cdot 1H_2O$) powder was mixed with alumina powder used as a carrier in Example 1 at a weight ratio of 2:8, the mixture was calcined at 1300 °C under an air atmosphere for 24 hours, and then it was granulized to prepare a calcined catalyst.

Using the prepared calcined catalyst, naphtha was steam cracked by the same method as in Examples 5 and 8 to prepare ethylene and propylene, and test results are shown in Table 5.

[Table 5]

| | Comparative Example 1 | Comparative Example 2 | Example 11 |
|---|---|---|---|
| Catalyst component | Catalyst-free thermal cracking | $KVO_3$ 10 wt% $B_2O_3$ 2 wt% | $K_3PO_4$ 20 wt% Alumina 80wt% |

Table continued

| | | Comparative Example 1 | Comparative Example 2 | Example 11 |
|---|---|---|---|---|
| Carrier | | - | alumina | - |
| Calcination temperature (°C) | | - | 750 | 1300 |
| Ethylene yield (wt%) | | 23.9 | 31.1 | 31.5 |
| Propylene yield (wt%) | | 12.8 | 17.3 | 17.3 |
| Coke produced in catalyst after reaction (wt%) | | - | 7.64 | 1.5 |
| Loss (wt%) | K | - | 20 | 0 |
| | V | - | 20 | - |
| | B | - | 96 | - |

According to the present invention, if olefins are prepared by steam cracking of hydrocarbons using a catalyst for hydrocarbon steam cracking comprising a potassium phosphate catalyst component, the ethylene propylene yield can be substantially increased compared to general thermal cracking. And compared to a common hydrocarbon steam cracking catalyst, the amount of coke accumulated in the catalyst can substantially decrease while maintaining similar ethylene and propylene yields, and thus the catalyst activity can be maintained for a long period and pressure decay in the thermal cracker can be reduced. In addition, since the catalyst has superior thermal stability at a high temperature, and coke is rapidly removed at a low temperature in a catalyst recycling process, life of the catalyst can be prolonged and thus operation is very favorable in terms of economy. The invention can be applied to a moving bed or a fluidized bed reactor, as well as a fixed bed reactor.

**Claims**

1.  A process for preparing olefins by steam cracking of hydrocarbons, comprising the step of steam cracking of hydrocarbons in the presence of a calcined catalyst comprising potassium phosphate as a catalyst component,
    wherein the potassium phosphate catalyst is a supported catalyst in which potassium phosphate is supported on a carrier, or
    wherein the potassium phosphate catalyst is a mixture of potassium phosphate and a metal oxide.

2.  The process for preparing olefins according to Claim 1, wherein the steam cracking is conducted at a reaction temperature of 600 to 1000 °C, at a weight ratio of steam/hydrocarbons of 0.3 to 1 and an LHSV (liquid hourly space velocity) of 1 to 20 hr -1.

3.  The process for preparing olefins according to Claim 1, wherein the steam cracking is conducted in a fixed bed reactor, a fluidized bed reactor, or a moving bed reactor.

4.  The process for preparing olefins according to Claim 1, wherein the carrier is selected from a group consisting of α-alumina, silica, silica-alumina, zirconium oxide, magnesium oxide, magnesium aluminate, and calcium aluminate.

5.  The process for preparing olefins according to Claim 1, wherein the supported catalyst comprises 0.5 to 50 wt% of supported potassium phosphate, on the basis of total weight of the supported catalyst.

6.  The process for preparing olefins according to Claim 1, wherein the calcined catalyst comprises 0.5 to 50 wt% of potassium phosphate.

7.  The process for preparing olefins according to Claim 1, wherein the metal oxide is selected from a group consisting of α-alumina, silica, silica-alumina, zirconium oxide, magnesium oxide, magnesium aluminate, and calcium aluminate.

8.  The process for preparing olefins according to Claim 1, wherein after the steam cracking is completed, the catalyst is regenerated by heating the catalyst, on the surface of which coke is generated, at 500 to 1300 °C in the presence of air, air and steam, or steam, to remove coke.

**Patentansprüche**

1. Verfahren zur Herstellung von Olefinen durch Dampf-Kracken von Kohlenwasserstoffen, umfassend den Schritt des Dampf-Krackens von Kohlenwasserstoffen in Gegenwart eines kalzinierten Katalysators, umfassend Kaliumphosphat als eine Katalysatorkomponente,
wobei der Kaliumphosphat-Katalysator ein geträgerter Katalysator ist, wobei das Kaliumphosphat auf einem Träger geträgert ist, oder
wobei der Kaliumphosphat-Katalysator ein Gemisch aus Kaliumphosphat und einem Metalloxid ist.

2. Verfahren zur Herstellung von Olefinen nach Anspruch 1, wobei das Dampf-Kracken bei einer Reaktionstemperatur von 600 bis 1000°C, bei einem Gewichtsverhältnis von Dampf/Kohlenwasserstoffen von 0,3 bis 1 und einer LHSV (liquid hourly space velocity) von 1 bis 20 hr$^{-1}$ durchgeführt wird.

3. Verfahren zur Herstellung von Olefinen nach Anspruch 1, wobei das Dampf-Kracken in einem Festbettreaktor, einem Wirbelschichtreaktor oder einem Fließbettreaktor durchgeführt wird.

4. Verfahren zur Herstellung von Olefinen nach Anspruch 1, wobei der Träger ausgewählt wird aus einer Gruppe bestehend aus $\alpha$-Aluminiumoxid, Silica, Silica-Aluminiumoxid, Zirkonoxid, Magnesiumoxid, Magnesiumaluminat und Calciumaluminat.

5. Verfahren zur Herstellung von Olefinen nach Anspruch 1, wobei der geträgerte Katalysator 0,5 bis 50 Gew.-% geträgertes Kaliumphosphat, bezogen auf das Gesamtgewicht des geträgerten Katalysators, umfaßt.

6. Verfahren zur Herstellung von Olefinen nach Anspruch 1, wobei der kalzinierte Katalysator 0,5 bis 50 Gew.-% Kaliumphosphat umfaßt.

7. Verfahren zur Herstellung von Olefinen nach Anspruch 1, wobei das Metalloxid ausgewählt wird aus der Gruppe bestehend aus $\alpha$-Aluminiumoxid, Silica, Silica-Aluminiumoxid, Zirkonoxid, Magnesiumoxid, Magnesiumaluminat und Calciumaluminat.

8. Verfahren zur Herstellung von Olefinen nach Anspruch 1, wobei, nachdem das Dampf-Kracken beendet ist, der Katalysator regeneriert wird, indem der Katalysator, auf dessen Oberfläche Koks gebildet wird, auf 500 bis 1300°C in Gegenwart von Luft, Luft und Dampf oder Dampf, erwärmt wird, um Koks zu entfernen.

**Revendications**

1. Procédé de préparation d'oléfines par vapocraquage d'hydrocarbures, comprenant l'étape de vapocraquage d'hydrocarbures en présence d'un catalyseur calciné comprenant du phosphate de potassium en tant que constituant du catalyseur,
**caractérisé en ce que** le catalyseur de phosphate de potassium est un catalyseur supporté dans lequel le phosphate de potassium est supporté sur un support, ou
**caractérisé en ce que** le catalyseur de phosphate de potassium est un mélange de phosphate de potassium et d'un oxyde métallique.

2. Procédé de préparation d'oléfines selon la revendication 1, **caractérisé en ce que** le vapocraquage est réalisé à une température réactionnelle de 600 à 1000 °C, avec un rapport massique vapeur d'eau/hydrocarbures de 0,3 à 1 et une vitesse spatiale horaire du liquide (abréviation en anglais : LHSV) comprise entre 1 et 20 h$^{-1}$.

3. Procédé de préparation d'oléfines selon la revendication 1, **caractérisé en ce que** le vapocraquage est réalisé dans un réacteur à lit fixe, un réacteur à lit fluidisé ou un réacteur à lit mobile.

4. Procédé de préparation d'oléfines selon la revendication 1, **caractérisé en ce que** le support est choisi dans le groupe composé d'$\alpha$-alumine, de silice, de silice-alumine, d'oxyde de zirconium, d'oxyde de magnésium, d'aluminate de magnésium et d'aluminate de calcium.

**5.** Procédé de préparation d'oléfines selon la revendication 1, **caractérisé en ce que** le catalyseur supporté comprend 0,5 à 50 % en poids de phosphate de potassium supporté, sur la base du poids total du catalyseur supporté.

**6.** Procédé de préparation d'oléfines selon la revendication 1, **caractérisé en ce que** le catalyseur calciné comprend 0,5 à 50 % en poids de phosphate de potassium.

**7.** Procédé de préparation d'oléfines selon la revendication 1, **caractérisé en ce que** l'oxyde métallique est choisi dans le groupe composé d'α-alumine, de silice, de silice-alumine, d'oxyde de zirconium, d'oxyde de magnésium, d'aluminate de magnésium et d'aluminate de calcium.

**8.** Procédé de préparation d'oléfines selon la revendication 1, **caractérisé en ce qu'**après que le vapocraquage est achevé, le catalyseur est régénéré en chauffant le catalyseur, sur la surface duquel du coke s'est formé, à 500 °C jusqu'à 1300 °C en présence d'air, d'air et de vapeur d'eau, ou de vapeur d'eau, afin d'éliminer le coke.

# Fig 1